Europäisches Patentamt

European Patent Office

Office européen des brevets

(19)

(11) Numéro de publication: **0 196 945**
**A1**

# (12) DEMANDE DE BREVET EUROPEEN

(21) Numéro de dépôt: 86400469.2

(22) Date de dépôt: 06.03.86

(51) Int. Cl.⁴: **F02M 31/16 , F02M 37/22**

(30) Priorité: 07.03.85 FR 8503718

(43) Date de publication de la demande:
**08.10.86 Bulletin 86/41**

(84) Etats contractants désignés:
**AT BE CH DE FR GB IT LI LU NL SE**

(71) Demandeur: **Carbonnelle, Hubert**
**1 Grande Rue**
**F-80113 Mericourt l'Abbé(FR)**

(72) Inventeur: **Carbonnelle, Hubert**
**1 Grande Rue**
**F-80113 Mericourt l'Abbé(FR)**

(74) Mandataire: **Ecrepont, Robert**
**Cabinet Ecrepont 12 Place Simon Vollant (Porte de Paris)**
**F-59800 Lille(FR)**

(54) **Dispositif de réchauffage du carburant des moteurs à combustion interne.**

(57) L'invention se rapporte à un dispositif de réchauffage du carburant des moteurs à combusion interne.

Il est caractérisé en ce qu'en combinaison :

-d'une part, il comporte un élément chauffant (19) enveloppant le corps de l'élément filtrant (3), et,

-d'autre part, il est constitué d'un échangeur de chaleur traversé par un fluide caloporteur.

Application à l'industrie des moteurs à combustion interne du type Diesel.

Fig:2

EP 0 196 945 A1

Rank Xerox

## DISPOSITIF DE RECHAUFFAGE DU CARBURANT DES MOTEURS A COMBUSTION INTERNE

L'invention se rapporte à un dispositif de réchauffage du carburant des moteurs à combustion interne.

Elle s'applique plus particulièrement mais non exclusivement au réchauffage du gasoil utilisé pour l'alimentation des moteurs Diesel.

On sait qu'à basse température et notamment à une température généralement inférieure à quatre degrés celsius, le gasoil s'épaissit et se fige du fait de la cristallisation de la parafine qu'il contient en solution soluble à plus haute température.

Cette cristallisation au sein du gasoil provoque généralement le colmatage des filtres à carburant placés avant la pompe à injection et par cela, elle induit l'arrêt du moteur.

Pour remédier à cet inconvénient, on ne peut bien entendu envisager de supprimer ces filtres, ce qui ne ferait que reporter le problème au niveau de la pompe à injection et ôterait à celle-ci toute protection contre d'éventuelles impuretés véhiculées par le gasoil.

Bien entendu, on sait, en intervenant au niveau du raffinage des produits pétroliers et/ou par le biais d'additifs, faire évoluer les spécifications du gasoil en fonction des saisons et notamment en hiver d'abaisser par de tels moyens les points de trouble et d'écoulement du gasoil en fonction de sa température. Malheureusement, l'utilisation de ces moyens se répercute notablement sur le prix du carburant et/ou provoque des ennuis mécaniques.

Pour remédier à ces inconvénients, il est connu de réchauffer le gasoil à l'aide d'au moins un éléments chauffant pour le porter à une température au moins suffisante pour en permettre l'utilisation.

Pour cela, il est connu (FR-A-2.519.705 et 2.521.219) de réchauffer directement le contenu du réservoir de gasoil.

Malheureusement, de tels dispositifs ne permettent pas de décolmater un filtre.

En outre, l'importance de la masse de gasoil à réchauffer induit un temps de mise en température très long avant toute augmentation du régime du moteur.

Pour tenter de remédier à ces inconvénients, il est connu (FR-A-2.534.317) de réchauffer le combustible directement avant son entrée dans le filtre.

De tels dispositifs comprennent principalement un échangeur de chaleur en forme de serpentin enroulé autour d'un segment de la conduite d'arrivée du combustible au filtre.

Dans ce serpentin, un fluide caloporteur, par exemple formé par le liquide de refroidissement du moteur, restitue au moins une partie de ses calories au combustible circulant dans le dit segment de conduite.

Malheureusement, malgré leur proximité du filtre, ces dispositifs ne permettent pas d'obtenir un décolmatage immédiat du filtre dans lequel le carburant se serait figé.

En outre, pour leur mise en place, ils nécessitent l'interruption de la conduite d'arrivée du combustible et nécessitent donc une pose par un spécialiste.

On connait bien sûr (FR-A-2.487.432) des filtres à gasoil qui intègrent au moins un éléments chauffant mais, s'ils donnent de bons résultats, ces filtres sont relativement onéreux et doivent être substitués au filtre d'origine équipant le moteur par un spécialiste.

Pour tenter de remédier à ces inconvénients, on connaît (FR-A-2.520.444) un dispositif à échangeur plaqué sous le fond d'un filtre de type déterminé.

Outre que le chauffage obtenu est très localisé, le dispositif est spécifique à un type de filtre donné et on ne peut donc faire face à tous les cas de figures susceptibles de se présenter.

Pour remédier à cet inconvénient, il est connu (FR-A-2.478.204 et 2.501.790) de disposer autour du corps du filtre une coiffe chauffée par une résistance électrique.

Par leur situation, ces dispositifs donnent de bons résultats mais ils sollicitent vivement les accumulateurs électriques équipant le moteur, lesquels accumulateurs sont déjà peu efficaces compte tenu de la température ambiante.

Par ailleurs, ces dispositifs présentent une inertie thermique pratiquement nulle et de ce fait, dès l'arrêt du courant, le filtre se colmate à nouveau.

Ils doivent donc être utilisés longuement avant d'autoriser chaque démarrage du moteur même après une période d'arrêt relativement brève.

Un résultat que l'invention vise à obtenir est un dispositif du type précité dont l'action de réchauffage se produit sensiblement à l'issue du démarrage du moteur et se trouve maintenue après l'arrêt du moteur pendant un temps relativement long et notamment pendant au moins une heure.

Un autre résultat que l'invention vise à obtenir est l'adaptabilité du dispositif de l'invention a au moins la plupart des filtres.

Est encore un résultat que l'invention vise à obtenir le meilleur rendement du moteur et, l'économie de carburant qui en découle.

Est également un résultat que l'invention vise à obtenir la facilité d'installation du dispositif de l'invention.

Un autre résultat que l'invention permet d'obtenir est un dispositif de prix de revient modéré.

D'autres résultats de l'invention apparaîtront clairement au cours de la description ci-après faite.

A cet effet, l'invention a pour objet un dispositif du type précité notamment caractérisé en ce qu'en combinaison,

-d'une part, il comporte un élément chauffant enveloppant le corps de l'élément filtrant, et,

-d'autre part, il est constitué d'un échangeur de chaleur traversé par un fluide caloporteur.

L'invention sera mieux comprise à l'aide de la description ci-après faite, à titre d'exemple non limitatif, en regard du dessin ci-annexé, qui représente - schématiquement :

-figure 1 : un mode de réalisation de l'invention adapté à un moteur à refroidissement par liquide,

-figure 2 : vu en coupe, un filtre équipé du dispositif de l'invention.

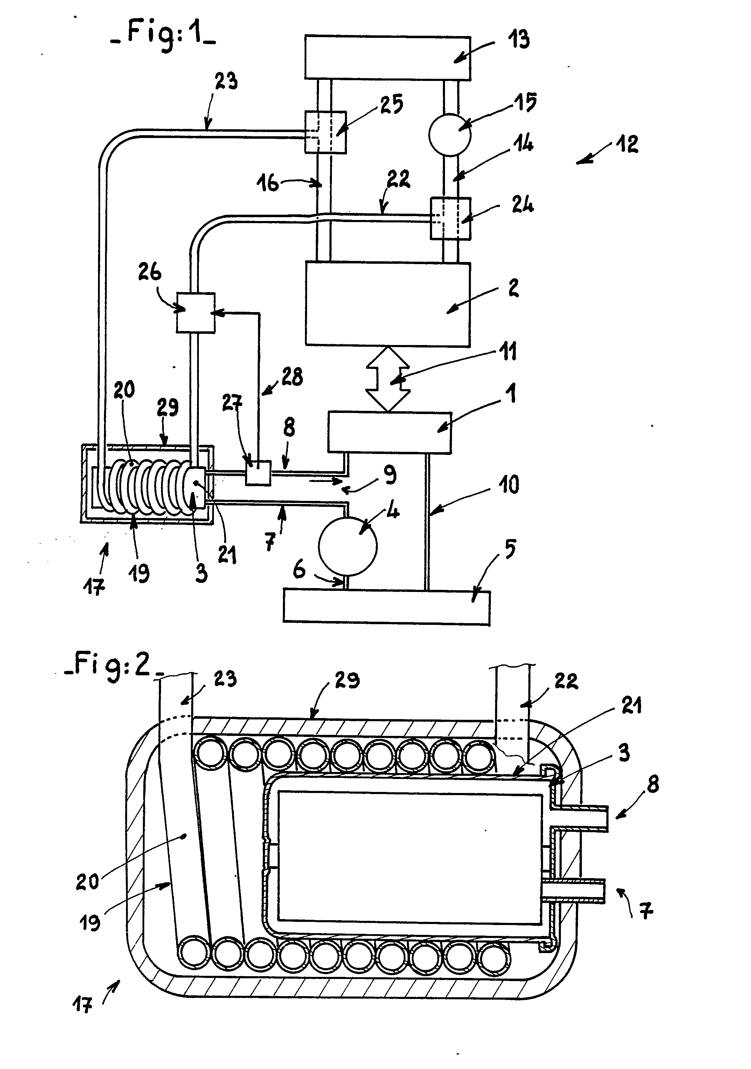

En se reportant à la figure 1, on note que, pour être alimentée en gasoil, la pompe d'injection 1 d'un moteur Diesel 2 est classiquement précédée d'un filtre 3 dans lequel débite une pompe d'alimentation 4 qui prélève le gasoil dans un réservoir 5.

Bien entendu, le réservoir 5, la pompe d'alimentation 4, le filtre 3, la pompe d'injection 1 sont reliés par des conduites qui sont repérées successivements 6, 7, 8.

On remarque que la pompe d'injection 1 est alimentée par un débit excédentaire 9 de gasoil qui retourne au réservoir 5 par une conduite 10.

Le débit excédentaire 9 est symbolisé par une flèche.

Ce débit excédentaire 9 dit débit de balayage a pour objectif de maintenir le gasoil du réservoir à une température acceptable mais aussi et surtout d'assurer le refroidissement de la pompe d'injection 1, et de la maintenir à une température normale de fonctionnement.

Le circuit 11 de distribution de gasoil au moteur 2 est simplement représenté par une flèche à double sens pour symboliser la distribution mais aussi de retour du débit de fuite des injecteurs (non représentés).

On note que, dans le mode de réalisation décrit et représenté, le moteur 2 comporte un dispositif de refroidissement 12 par circulation d'un fluide (non représenté) au travers d'un radiateur 13 d'échange avec l'air ambiant.

Ceci n'a pas de valeur limitative pour l'invention et le dispositif de l'invention fonctionnerait tout aussi bien s'il équipait un moteur 2 refroidi par air (non représenté).

Bien entendu, la circulation de fluide de refroidissement vers le radiateur s'effectue grâce à une pompe de circulation (non représentée).

Il faut cependant noter que, classiquement, cette circulation ne s'établit qu'au delà d'une certaine température du fluide et que, pour cela, la conduite de sortie 14 du fluide est contrôlée par une vanne thermostatique 15.

Après son passage dans le radiateur 13, le fluide de refroidissement retourne dans le moteur 2 par une conduite de retour 16.

En se reportant à la partie d'alimentation au gasoil du moteur 2, on note que le filtre 3 est pourvu d'un dispositif 17 comportant un élément chauffant 19 qui, en combinaison, d'une part, enveloppe le corps de l'élément filtrant et, d'autre part, au lieu d'être constitué par une résistance électrique, consiste en un échangeur de chaleur 19 qui exploite l'énergie calorifique d'un fluide caloporteur tel notamment celui issu du circuit de refroidissement du moteur.

A cet effet, une partie du fluide à refroidir est, en amont du radiateur, détournée pour aller alimenter l'échangeur et réchauffer le gasoil du filtre.

Dans un mode préféré de réalisation, l'échangeur 1 est formé par un serpentin 20 enroulé en hélice pour délimiter un logement cylindrique dans lequel est simplement emboîté le corps 21 du filtre 3.

On note que, de ce fait, après une éventuelle mais impossible perforation du serpentin 20, par exemple due à une altération du matériau qui le constitue, il ne peut y avoir de mélange entre le fluide caloporteur et le carburant contenu dans le filtre 3. On note que l'échangeur 19 s'étend au moins sur toute la dimension longitudinale du filtre 3.

On remarque que, tout en satisfaisant à la condition précédente, le serpentin 20 constituant l'échangeur présente, de préférence, à la base du filtre deux à trois spires supplémentaires mais non engagées sur le corps 21 du filtre.

Cela a avantageusement pour effet de réchauffer l'air circulant à la base du filtre 3.

Le fluide de refroidissement qui alimente l'échangeur 19 est, par une conduite 22, prélevé à sa sortie du moteur 2 sur la conduite 14 en amont de la vanne thermostatique 15, ceci afin de ne pas subir son influence.

Après passage dans l'échangeur 19, le fluide prélevé est par une conduite 23 restitué au circuit de refroidissement du moteur au niveau de la conduite 16 qui forme classiquement le circuit de retour vers le moteur 2 du fluide passé dans le radiateur 13.

L'homme de l'art est à même de déterminer les moyens de raccordement 24, 25 les plus appropriés pour raccorder les conduites 22, 23 respectivement aux conduites 14, 16 afin que le circuit de refroidissement du moteur ne soit pas perturbé.

On note que, si l'intervention du dispositif de l'invention ne présente pas de difficultés puisqu'elle ne requiert pas de connaissance ni de matériel spécifique, il en est de même pour l'éventuelle dépose du dispositif.

En effet, les conduites 14 et 16 interrompues pour la pose des moyens 24, 25 peuvent être facilement raccordées après la dépose du dispositif et l'homme de l'art est à même de déterminer les moyens les plus appropriés à cet effet.

On a souligné plus avant au niveau de la description de l'alimentation en carburant, l'intérêt du débit excédentaire de balayage 9.

Ainsi, afin de maintenir la température du gasoil réchauffé dans le filtre à une valeur acceptable pour la pompe à injection, le passage du fluide de refroidissement dans l'échangeur 19 est contrôlé par un organe thermosensible 26.

De préférence, le dispositif 17 de réchauffage est équipé d'un organe thermosensible piloté par un capteur de température du gasoil.

Dans un mode préféré de réalisation, l'organe thermosensible 26 est piloté par une sonde thermique 27 qui prélève l'information 28 de température du gasoil au moins à sa sortie du filtre 3 par la canalisation 8.

Le dispositif de réchauffage 17 pourrait être équipé de tout autre moyen en vue de réguler le passage du fluide de refroidissement dans l'échangeur au moyen d'une commande manuelle (non représentée).

Comme indiqué plus haut, le dispositif de l'invention est utilisable sur un moteur à refroidissement par air. L'échangeur 19 reçoit alors l'air chaud prélevé au niveau du collecteur d'évacuation (non représenté).

Bien entendu, après son passage dans l'échangeur 19, l'air chaud en est rejeté directement à sa sortie (non représentée).

Naturellement quel que soit le mode de refroidissement du moteur 2, l'échangeur 19 est en matériau bon conducteur de la chaleur et par exemple en cuivre.

On note que l'échangeur 19 est, tant par sa forme en serpentin 20 que par la maléabilité du matériau qui le constitue, suffisamment déformable pour une parfaite adaptation au filtre 3.

De préférence, le dispositif 17 de réchauffage est extérieurement équipé d'un carter isolant 29.

L'homme de l'art est à même de déterminer la nature des moyens les plus appropriés pour constituer les conduites 22 et 23 équipant le dispositif 17 de réchauffage.

**Revendications**

1. Dispositif de réchauffage (17) du carburant d'un moteur (2) à combustion interne du type Diesel dont la pompe d'injection (1) est, pour son alimentation en gasoil, précédée d'un élément filtrant (3), lequel moteur (2), pour son refroidissement, a sa culasse qui y est traversée par un fluide caloporteur circulant dans un dispositif de refroidissement comprenant un radiateur (13) qui, par deux conduites (14, 16), est relié respectivement en sortie et à l'entrée de la culasse du moteur (2) et ce en traversant, en sortie du moteur, un organe (15) de contrôle de la température pour ne commander le refroidissement que si le fluide caloporteur le nécessite, lequel dispositif (17) de réchauffage du carburant :

-d'une part, comporte un élément chauffant (19) enveloppant le corps dè l'élément filtrant (3), et,

-d'autre part, est constitué d'un échangeur de chaleur traversé par un fluide caloporteur,

le dispositif étant **CARACTERISE** en ce que l'échangeur de chaleur consiste en un serpentin (20) enroulé en hélice et en ce que le corps du filtre est emboîté dans ce serpentin.

2. Dispositif selon la revendication 1 dans lequel le fluide caloporteur est constitué par le fluide de refroidissement caractérisé en ce que, en combinaison, l'échangeur :

-a ses extrémités d'entrée et de sortie qui, pour prélever le fluide de refroidissement, sont reliées au circuit du fluide chacune au niveau de l'une des conduites (14, 16) de liaison entre le moteur (2) et le radiateur (13) et,

-a son entrée qui est, plus précisément, raccordée entre la sortie de la culasse du moteur (2) et l'organe (15) de contrôle de la température du fluide.

_Fig:1_

_Fig:2_

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | DE-A-2 841 249 (BOSCH)<br>* Page 5, dernier alinéa; page 6, alinéa 1; page 7, dernier alinéa; page 8, en entier; page 9, alinéa 1; page 12, dernier alinéa; page 13, alinéa 1 *<br><br>--- | 1,2 | F 02 M 31/16<br>F 02 M 37/22 |
| Y | EP-A-0 045 707 (DIRY)<br>* Résumé; page 4, lignes 11-16 *<br>& FR - A - 2 487 432 (Cat. D)<br><br>--- | 1,2 | |
| Y | US-A-4 455 227 (HARMSCO INC)<br>* Résumé; colonne 2, lignes 38-43; colonne 3, lignes 16-26,64-66 *<br><br>--- | 1,2 | |
| A | US-A-4 372 260 (BAKER)<br><br>--- | | DOMAINES TECHNIQUES RECHERCHES (Int. Cl.4) |
| A | BE-A- 894 412 (INNOVATIONS & DIFFUSION)<br><br>--- | | F 02 M<br>B 01 D |
| A | DE-A-2 553 973 (SCHRAMM)<br><br>----- | | |

Le présent rapport de recherche a été établi pour toutes les revendications

| Lieu de la recherche | Date d'achèvement de la recherche | Examinateur |
|---|---|---|
| LA HAYE | 12-06-1986 | JORIS J.C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82